Europäisches Patentamt

(19) European Patent Office

Office européen des brevets

(11) Numéro de publication: **0 169 752**
**A1**

(12) **DEMANDE DE BREVET EUROPEEN**

(21) Numéro de dépôt: **85401178.0**

(22) Date de dépôt: **13.06.85**

(51) Int. Cl.⁴: **H 04 N 1/00**
**H 04 N 1/46, H 04 N 7/04**

(30) Priorité: **22.06.84 FR 8409879**

(43) Date de publication de la demande:
**29.01.86 Bulletin 86/5**

(84) Etats contractants désignés:
**AT BE CH DE GB IT LI LU NL SE**

(71) Demandeur: **THOMSON-LGT LABORATOIRE GENERAL DES TELECOMMUNICATIONS**
**51, boulevard de la République**
**F-78400 Chatou(FR)**

(72) Inventeur: **Cluniat, Claude**
**THOMSON-CSF SCPI 173, bld Haussmann**
**F-75379 Paris Cedex 08(FR)**

(72) Inventeur: **Ta, Hong-Anh**
**THOMSON-CSF SCPI 173, bld Haussmann**
**F-75379 Paris Cedex 08(FR)**

(72) Inventeur: **Tichit, Bernard**
**THOMSON-CSF SCPI 173, bld Haussmann**
**F-75379 Paris Cedex 08(FR)**

(74) Mandataire: **Lincot, Georges et al,**
**THOMSON-CSF SCPI 173, Bld Haussmann**
**F-75379 Paris Cedex 08(FR)**

(54) **Transmetteur de programmes audiovisuels par liaison FM et récepteur associé.**

(57) Le transmetteur comporte des moyens de génération (10) de composantes vidéo appliqués aux entrées de transmetteurs (20) qui mettent en mémoire périodiquement les composantes vidéo au rythme d'analyse et les restituent à un rythme lent à un modulateur (30). Ce modulateur module en fréquence, par les composantes restituées, des sous-porteuses correspondantes choisies dans la bande S.C.A (Service Channel Authorized), bande allouée à chaque canal FM en plus de la bande correspondant au signal stéréo. Une sous-porteuse modulée en fréquence par le son est également prévue dans cette même bande. Ces sous-porteuse modulées sont combinées aux sous-porteuses audiostéréo dans un modulateur FM(60) et diffusés via un étage de puissance correspondant dans un canal FM. Le récepteur associé effectue la séparation des sous-porteuses et la démodulation correspondante, à la réception.

L'invention s'applique, notamment, à la diffusion de programmes audiovisuels, du type conférences, programmes publicitaires, programmes d'enseignement.

FIG_1

Croydon Printing Company Ltd

1

## Transmetteur de programmes audiovisuels par
## liaison FM et récepteur associé

L'invention se rapporte aux émetteurs-récepteurs en bande FM et plus particulièrement à un transmetteur de programmes audiovisuels par liaison FM et au récepteur associé.

Classiquement, la bande de fréquence allouée à chaque canal FM se compose de deux parties : une sous-bande correspondant à la stéréophonie qui s'étend de 0 à 53 KHz, et une sous-bande de service, appelée bande "S.C.A" (abréviation de la dénomination anglo-saxonne Service Channel Authorized, comprise entre 53 KHz et 110 KHz). Il est déjà connu de transmettre à côté de la bande stéréo, dans la bande S.C.A, de la musique d'ambiance qui peut être séparée à la réception FM moyennant un simple filtre et une démodulation. L'invention a pour objet un transmetteur permettant de transmettre dans la bande autorisée S.C.A, des programmes audiovisuels comprenant des images fixes et un commentaire sonore.

Il existe un transmetteur, genre "Tevelex" qui assure la transmission d'images télévisées sur des lignes téléphoniques. Le transmetteur stocke en mémoire une des images fournies par une caméra et convertit ce signal vidéo en un signal audiofréquence dans la bande 300 à 3400 Hz. L'image, transmise lentement vers un récepteur associé, est inscrite dans une mémoire de trame, lue à vitesse rapide pour la restitution.

L'invention met en oeuvre de tels transmetteurs, ou une variante particulièrement adaptée à l'invention d'un tel transmetteur, combinés à des circuits de traitement, et permet la transmission d'images couleurs fixes, plus le son correspondant, par liaison FM. Dans un mode de réalisation, le transmetteur comporte en outre des moyens d'enregistrement sur support magnétique classique qui permettent également de transmettre via un système d'émission réception FM de tels programmes audiovisuels.

Suivant l'invention, un transmetteur de programmes audiovisuels par liaison FM, comportant des moyens de génération de programmes sous forme de signaux vidéo et son associés, est caractérisé en ce qu'il comporte un dispositif à mémorisation rapide et lecture lente du signal vidéo, un modulateur à modulation de fréquences recevant le signal vidéo relu lentement issu du dispositif à mémorisation et le signal son associé, et modulant par ces signaux des sous-porteuses choisies dans la bande de service d'un canal à modulation de fréquence, la sortie du modulateur de sous-porteuse étant reliée à une entrée de modulation, dite entrée S.C.A, d'un modulateur FM recevant également un signal audiostéréo appliqué à une entrée correspondante, le transmetteur comportant en outre des moyens d'émission, amplificateur de puissance et antenne, reliés à la sortie de ce modulateur pour l'émission du signal composite.

L'invention a également pour objet le récepteur associé.

L'invention sera mieux comprise et d'autres caractéristiques apparaîtront à l'aide de la description qui suit en référence aux figures annexées.

- La figure 1 est un schéma synoptique d'un premier mode de réalisation du transmetteur suivant l'invention.

- La figure 2 est un schéma détaillé du modulateur image sur la figure 1.

- La figure 3 est un diagramme fréquentiel montrant les bandes de fréquences des différentes composantes du signal transmis.

- La figure 4 est un schéma synoptique du récepteur associé.

- La figure 5 est le schéma synoptique d'un second mode de réalisation du transmetteur suivant l'invention.

- La figure 6 est un schéma détaillé du modulateur image du transmetteur représenté sur la figure 5.

- La figure 7 est le diagramme fréquentiel montrant les bandes de fréquence des différentes composantes du signal transmis par un transmetteur selon la figure 5.

- La figure 8 est le schéma d'un récepteur associé au transmetteur représenté sur la figure 5.

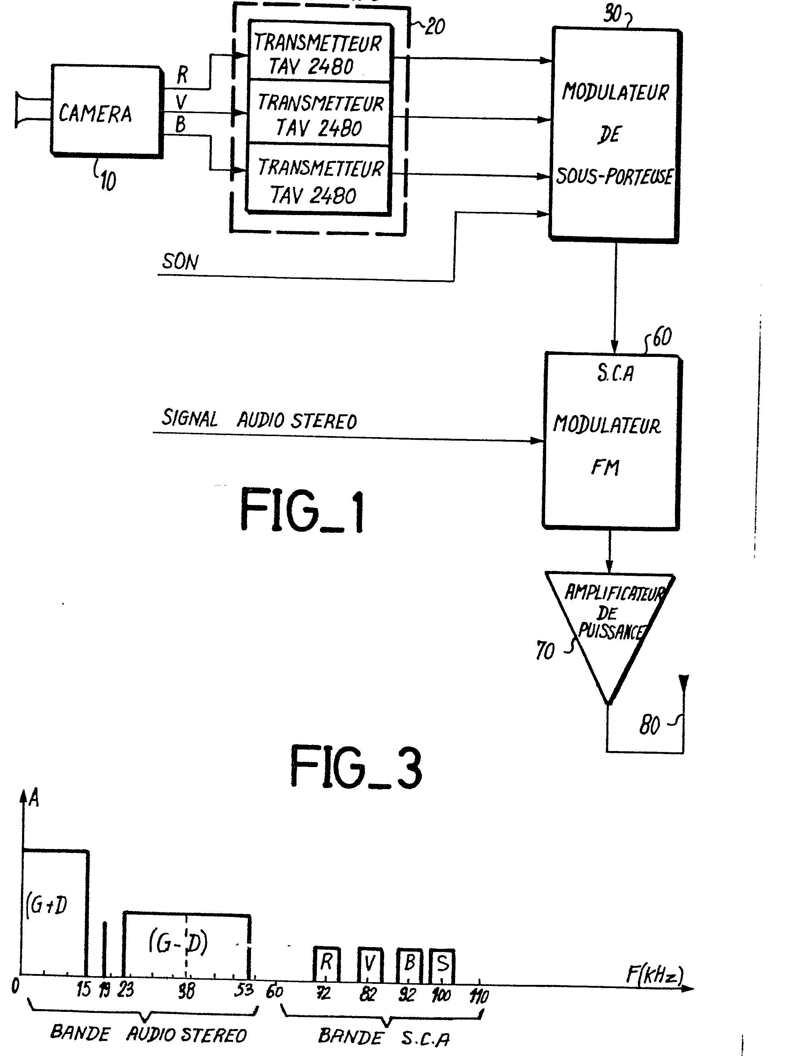

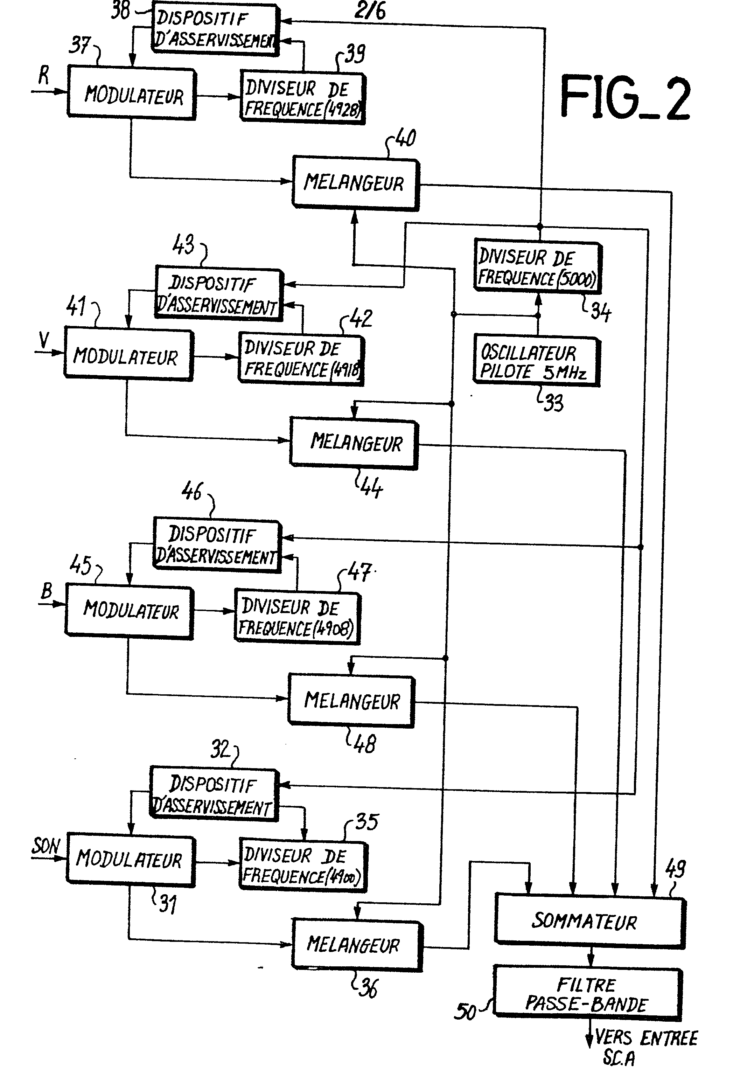

Le premier mode de réalisation du transmetteur suivant l'invention représenté sur la figure 1 comporte une caméra 10 fournissant les trois composantes de couleur, R, V, et B. Trois transmetteurs, par exemple du type TAV 2480 fabriqué par la Société THOMSON-CSF, traitent les composantes issues de cette caméra pour stocker dans leurs mémoires les signaux correspondant à certaines des images vidéo issues de la caméra, et convertir ce signal vidéo en un signal audiofréquence occupant une bande de 300 Hz à 3 KHz. La mise en mémoire est rapide et la lecture de la mémoire est lente. Les trois composantes correspondantes R, V, B, transmises à vitesse lente, sont appliquées aux entrées d'un modulateur image 30 qui comporte également une quatrième entrée pour le signal son. Un schéma détaillé de ce modulateur 30 est représenté sur la figure 2. Un modulateur FM 60 comporte une première entrée recevant le signal audio stéréophonique, dans la bande 0 à 53 KHz, et une seconde entrée destinée à recevoir le signal à transmettre dans la bande S.C.A. Cette seconde entrée est reliée à la sortie du modulateur 30. Le signal composite résultant à la sortie du modulateur FM 60 est appliqué à un amplificateur de puissance 70 et transmis à une antenne d'émission 80.

La figure 2 représente un schéma détaillé du modulateur image 30. L'entrée son de ce modulateur est reliée à l'entrée d'un premier modulateur, dit modulateur son 31. La fréquence porteuse de modulation est fournie par la sortie d'un dispositif d'asservissement de fréquence 32 qui compare la fréquence issue d'un oscillateur pilote 33, après division dans un diviseur de fréquence 34, à la fréquence correspondante issue du modulateur après division dans un diviseur 35. A titre d'exemple, la fréquence $F_0$ de l'oscillateur pilote peut être égale à 5 MHz, le coefficient de division du diviseur 34 peut être égal à 5000, et la fréquence porteuse son $F_4$ issue du modulateur 31 peut être égale à 4,9 MHz, le coefficient de division du diviseur 35 étant égal à 4900. Le modulateur son 31 fournit donc la porteuse à 4,9 MHz modulée par le signal son. Cette fréquence modulée est appliquée à la première entrée d'un mélangeur 36 qui reçoit sur sa seconde entrée le signal à 5 MHz issu de l'oscillateur pilote 33. La sortie du mélangeur 36 fournit donc le signal modulé à la fréquence $F_S = F_0 - F_4 = 5 - 4,9$ MHz, soit un signal à la fréquence sous-porteuse 100 KHz modulé en fréquence par le signal son.

De même, l'entrée R de la composante vidéo rouge est reliée à l'entrée d'un modulateur de fréquence 37, dont la fréquence porteuse $F_1$ est définie par un dispositif d'asservissement 38 qui reçoit d'une part la fréquence de référence à la sortie du diviseur 34, et d'autre part la fréquence porteuse du modulateur 37 après division dans un diviseur 39.

Le coefficient de division du diviseur 39 est par exemple choisi égal à 4928. Le signal de sortie du modulateur 37 est appliqué à une entrée d'un mélangeur 40 recevant sur son autre entrée le signal pilote issu de l'oscillateur 33. La sortie du mélangeur 40 fournit donc un signal à une fréquence sous-porteuse $F_R = F_0 - F_1 = 5000 - 4928 = 72$ KHz, modulée en fréquence par la composante rouge du signal vidéo.

Les chaînes de traitement des composantes verte et bleue sont semblables, la fréquence porteuse $F_2$ du modulateur 41 pour la composante verte étant choisie égale à 4918 KHz, le coefficient de division du diviseur 42 étant donc égal à 4918, la sortie de ce diviseur étant reliée à une entrée d'un dispositif d'asservissement 43 recevant sur son autre entrée le signal pilote issu du diviseur 34. Un mélangeur 44 fournit un signal à une fréquence porteuse $F_V = F_0 - F_2 = 82$ KHz. De même, la sous-porteuse dans la bande S.C.A pour la composante bleue est choisie égale à $F_B = 92$ KHz, le modulateur 45 recevant un signal issu d'un dispositif d'asservissement 46 à une fréquence $F_3 = 4908$ KHz commandé par le signal de sortie d'un diviseur 47 de coefficient 4908 recevant à la fréquence porteuse du modulateur 45. La sortie du modulateur 45 est reliée à l'entrée d'un mélangeur 48 qui fournit la porteuse à 92 KHz modulée en fréquence par la composante vidéo bleue.

Les sorties des mélangeurs 36, 40, 44, et 48 sont reliées aux entrées d'un additionneur 49. La sortie de cet additionneur est reliée à l'entrée d'un filtre de bande 50, dont la bande est choisie entre 60 et 110 KHz par exemple, pour filtrer les sous-porteuses modulées en fréquence par les signaux son et par les composantes vidéo R, V, et B. La sortie du modulateur 30 fournit donc les composantes d'une image et le son associé dans la bande 60 à 110 KHz qui sont appliquées à l'entrée S.C.A du modulateur FM 60.

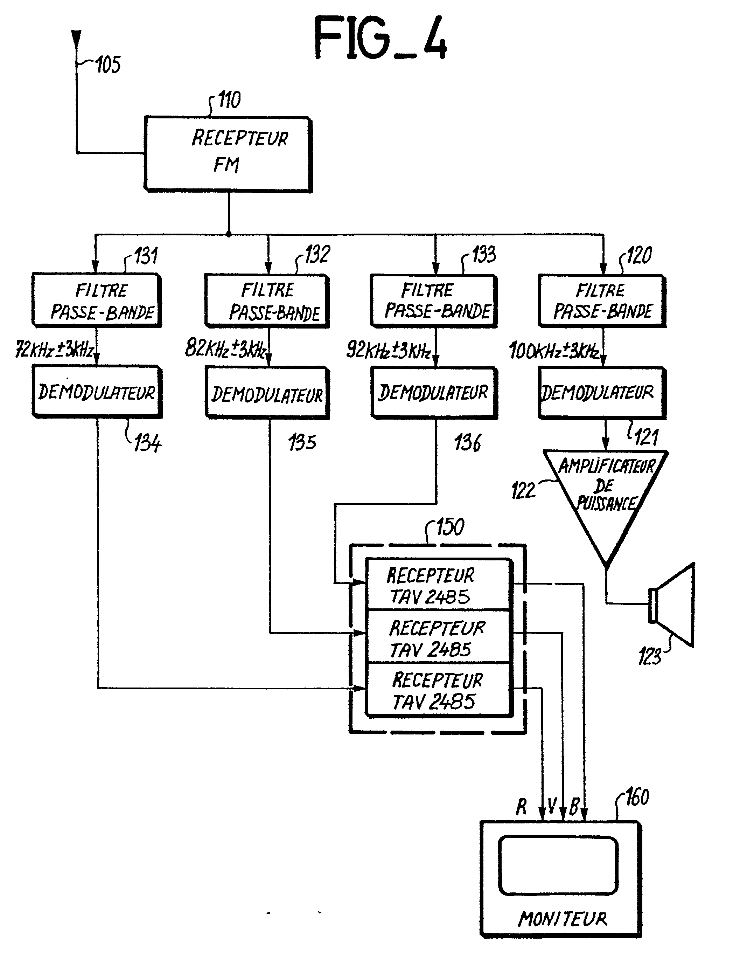

La figure 3 représente le signal en bande de base appliqué aux entrées du modulateur 60 : ce signal comporte dans la bande stéréo, de 0 à 60 KHz, la bande dite D + G (droite + gauche) de 0 à 15 KHz, le signal pilote stéréo à 19 KHz, et la voie D - G (droite - gauche) transmise en double bande entre 23 et 53 KHz. Par ailleurs le signal comporte dans la bande S.C.A quatre sous-bandes correspondant respectivement à la sous-porteuse modulée en fréquence par le son à 100 KHz, sur une bande de 6 KHz, et aux sous-porteuses modulées par les composantes vidéo respectivement rouge, verte, et bleue centrées respectivement à 72 KHz, 82 KHz, et 92 KHz, chacune sur une bande de 6 KHz. Les valeurs indiquées ci-dessus pour les fréquences sous-porteuses ont été données à titre d'exemple non limitatif. Ces valeurs peuvent être interverties, ou modifiées, pourvu que les bandes correspondantes soient convenablement espacées dans la bande de service.

La figure 4 représente le récepteur correspondant. Il comporte une antenne de réception FM, 105, reliée à l'entrée d'un récepteur FM, 110. La sortie de ce récepteur FM fournit le signal en bande de base, entre 0 et 100 KHz. Ce signal est appliqué à l'entrée d'un filtre passe-bande 120 à flancs très raides centré à la fréquence sous-porteuse de modulation son, 100 KHz, et avec une bande de 6 KHz, ce filtre peut être par exemple un filtre du type "Cauer" à sept pôles. La sortie de ce filtre 120 est reliée à l'entrée d'un démodulateur son 121 dont la sortie est elle-même reliée à un amplificateur de puissance 122 qui alimente un haut-parleur 123.

Par ailleurs le signal de sortie du récepteur FM 110 est également reliée aux entrées de trois filtres passe-bande respectivement 131, 132 et 133 centrés sur les fréquences sous-porteuses des composantes vidéo rouge, verte et bleue, 72, 82 et 92 KHz, et également avec une bande de 6 KHz. Les sorties de ces filtres passe-bande à flancs très raides, également du type "Cauer" à 7 pôles par exemple, sont reliées à des démodulateurs, respectivement 134, 135 et 136 fournissant les composantes vidéo respectivement R, V et B. Ces trois composantes sont appliquées à un récepteur 150, constitué de trois récepteurs du type TAV 2485 fabriqué par la Société THOMSON-CSF, adaptés aux transmetteurs TAV 2480 utilisés à l'émission, dans lequel l'image transmise lentement vers le récepteur est inscrite dans une mémoire de trame qui est lue à vitesse rapide. Les composantes de sortie de ce récepteur sont donc adaptées à une utilisation directe sur un moniteur de télévision standard, 160. A l'émission comme à la réception l'image est renouvelée toutes les 6, 12 ou 24 secondes, selon la définition souhaitée. Plus la définition souhaitée est grande plus la cadence de renouvellement de l'image est faible.

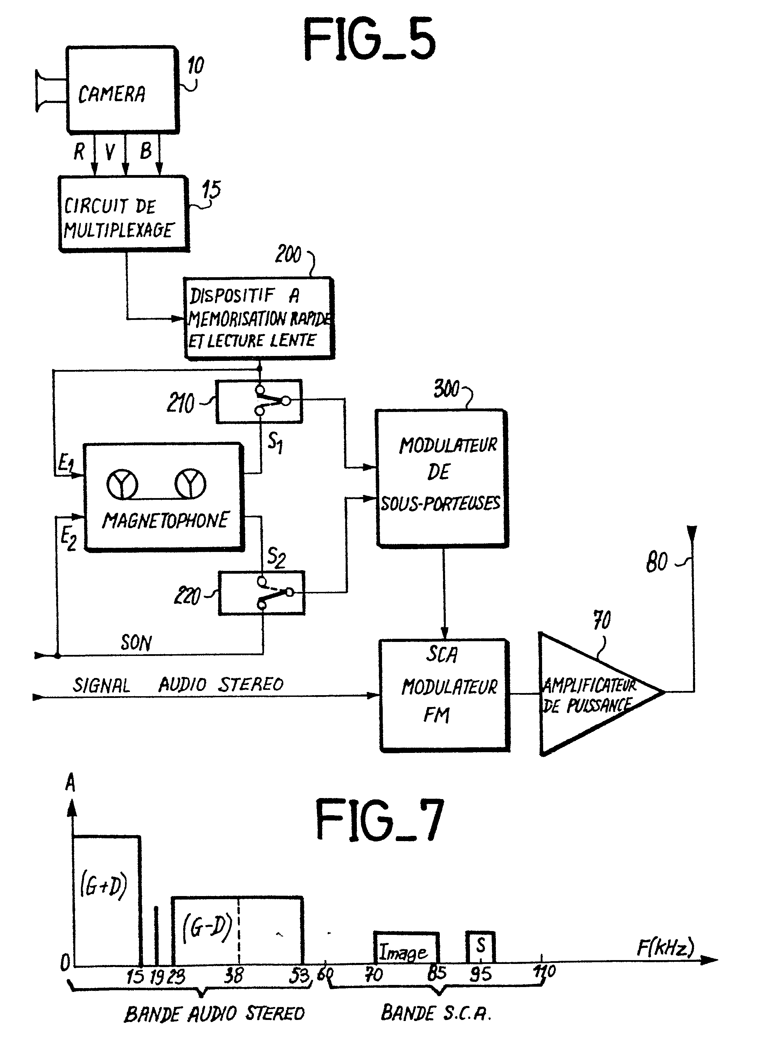

Ce transmetteur et le récepteur associé permettent donc de transmettre via une liaison FM des images couleurs fixes, et une voie son associée. Mais ce premier mode de réalisation ne permet pas d'utiliser, pour un stockage temporaire, un magnétophone standard du fait que les composantes R, V et B sont transmises toutes les trois simultanément, en plus de la voie son, un magnétophone standard ne comportant pas suffisamment de pistes. La figure 5 représente un second mode de réalisation de l'invention qui permet d'utiliser des moyens de stockage du type magnétophone standard, au moyen d'un traitement supplémentaire prévu dans le transmetteur.

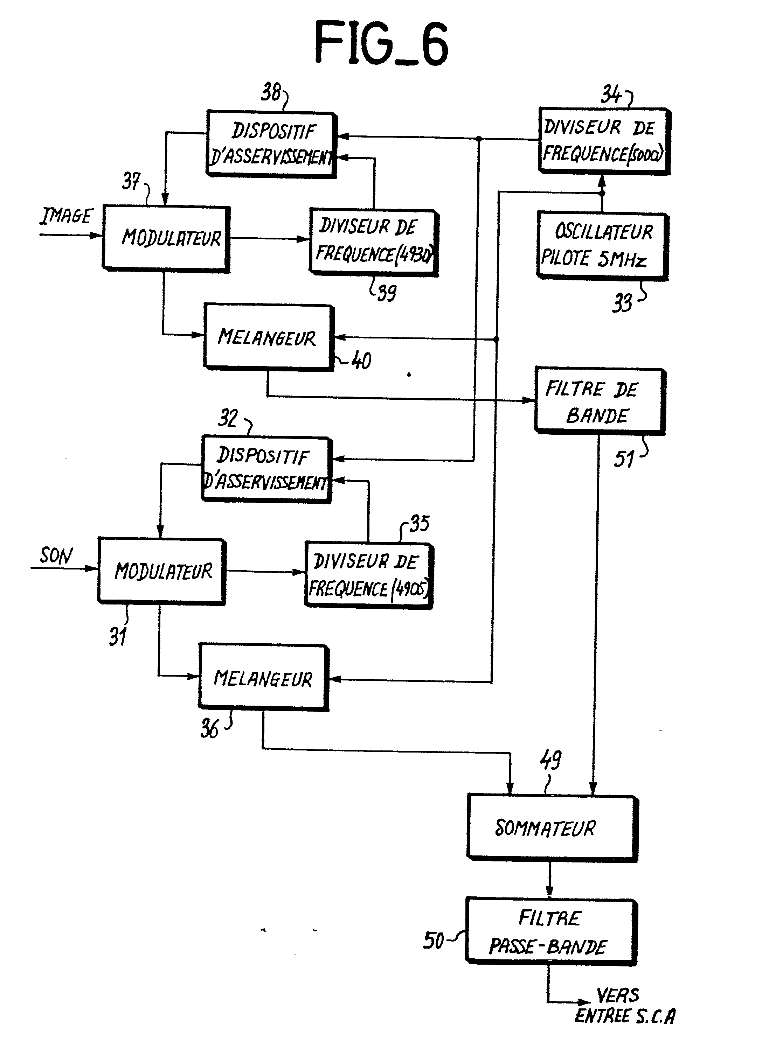

Les mêmes éléments que sur les figures précédentes ont été désignés par les mêmes repères. La caméra vidéo 10 fournit les trois composantes d'image R, V, B, à un circuit de multiplexage temporel 15 de ces composantes dont la sortie est reliée à un transmetteur 200 qui comporte non plus trois transmetteurs TAV 2480 comme dans le premier mode de réalisation, mais un seul transmetteur 200 ayant une capacité mémoire supérieure. Ce circuit de multiplexage 5 prévu entre les sorties de la caméra et le transmetteur pourrait aussi fournir au lieu des signaux R, V, B multiplexés les composantes de luminance (4) et de différences de couleur multiplexées. Le signal multiplexé qui forme un signal vidéo séquentiel est appliqué à l'entrée du transmetteur 200 qui le met en mémoire rapidement, et qui permet sa lecture lente. Ce transmetteur a comme indiqué ci-dessus une capacité mémoire suffisante pour la mise en mémoire avec la définition souhaitée du signal vidéo multiplexé. Ce signal multiplexé, après traitement dans le transmetteur 200, occupe une bande égale à 15 KHz par exemple, et qui dépend de la définition retenue pour le signal multiplexé. La sortie de ce transmetteur peut être reliée directement à un modulateur image 300 en vue de son émission par un émetteur FM ou à une entrée d'enregistrement $E_1$ d'un magnétophone standard 100, selon la position d'un commutateur 210. Le son synchronisé avec cette image peut également soit être transmis à l'entrée son du modulateur 300, soit être enregistré via l'entrée d'enregistrement son $E_S$ sur une seconde piste du magnétophone 100, en synchronisation avec l'enregistrement sur la première piste selon la position d'un commutateur 220. Un schéma détaillé du modulateur 300 est représenté sur la figure 6. La sortie de ce modulateur est reliée à l'entrée "S.C.A" du modulateur FM 60 qui reçoit par ailleurs le signal audiostéréo dans la bande de base. La sortie du modulateur FM est reliée comme précédemment à l'entrée d'un amplificateur de puissance 70 dont le signal de sortie est appliqué à l'antenne d'émission 80.

La figure 6 montre donc un schéma détaillé du modulateur image 300 correspondant à ce second mode de réalisation. Ce modulateur est tout à fait semblable au modulateur 30 de la figure 2 si ce n'est qu'il ne comporte qu'une voie son et une voie image pour la génération des deux porteuses modulées. On y retrouve donc l'entrée image reliée à l'entrée du modulateur image 37 dont la fréquence porteuse est issue d'un dispositif d'asservissement 38 commandé par un diviseur 39. Le coefficient de division de ce diviseur est choisi égal à 4930, la fréquence porteuse image étant choisie égale à 70 KHz et obtenue par mélange dans le mélangeur 40 entre la fréquence de l'oscillateur pilote 33, 5 MHz, et la fréquence porteuse issue du modulateur image, 4,930 MHz. Comme précédemment le dispositif d'asservissement est commandé par l'oscillateur pilote 33 après division dans un diviseur 34 dont le coefficient de division est 5000. Dans ce mode de réalisation, pour obtenir une définition suffisante, on choisit de transmettre le signal image sous forme d'une seule bande latérale. En conséquence, le signal issu du mélangeur 40, à la fréquence porteuse 70 KHz modulée par le signal de modulation image de bande 15 KHz environ est filtré dans un filtre de bande latérale supérieure 51 qui fournit uniquement la bande latérale supérieure du signal issu du mélangeur 40. Ce signal est appliqué à l'entrée de l'additionneur 49. La voie de modulation son est semblable à celle représentée sur la figure 2 si ce n'est que la fréquence porteuse son dans le signal de modulation est choisie égale à 95 KHz, le diviseur 35 ayant un coefficient de division égal à 4905. Le mélangeur 36 fournit donc la porteuse à 95 KHz par différence entre la fréquence de l'oscillateur pilote 5000 KHz et la fréquence porteuse du modulateur 31, 4905 KHz. Ce signal issu du mélangeur 36 est appliqué à la seconde entrée de l'additionneur 49 dont la sortie est reliée à l'entrée d'un filtre de bande 50 qui filtre entre 60 et 110 KHz.

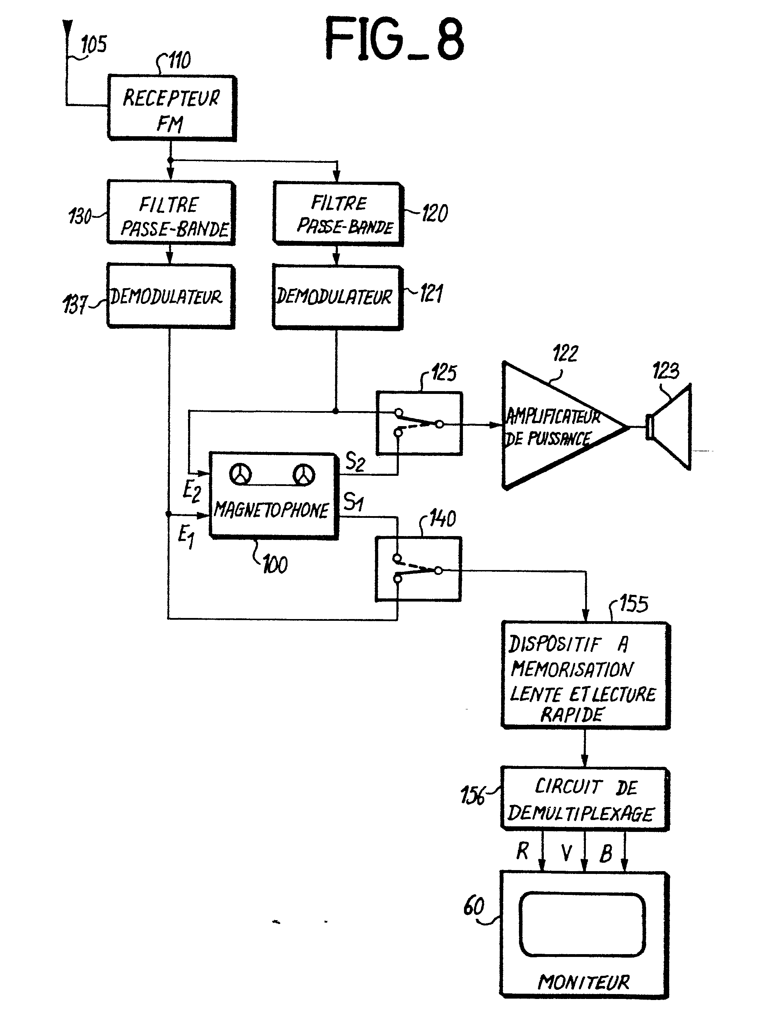

La figure 7 représente le signal résultant en bande de base dans ce mode de réalisation. La bande audiostéréo est identique à celle représentée sur la figure 3. Par contre la bande S.C.A dans laquelle est transmise l'image comporte une porteuse modulée en fréquence par le son à 95 KHz, dans une bande de 10 KHz, et une bande latérale de modulation par l'image entre 70 et 85 KHz.

La figure 8 représente le récepteur correspondant à ce second mode de réalisation. L'antenne du récepteur 105 fournit le signal au récepteur FM 110 qui délivre le signal reçu en bande de base, entre 0 et 110 KHz. Comme dans le mode de réalisation précédent ce signal est appliqué à l'entrée d'un filtre centré sur la fréquence son, 120, 95 KHz dans ce mode de réalisation, le signal de sortie du filtre étant appliqué à l'entrée d'un démodulateur son 121. La sortie de ce démodulateur est reliée à l'entrée d'un amplificateur de puissance audio 122 via un commutateur 125, la sortie de l'amplificateur de puissance étant reliée à un haut-parleur 123. De même, la sortie du récepteur FM est reliée à l'entrée d'un filtre pour la porteuse image modulée, 130, de bande comprise entre 70 et 85 KHz, dont la sortie est reliée à l'entrée d'un démodulateur image 137. La sortie de ce démodulateur image est reliée à l'entrée d'un récepteur 155 par l'intermédiaire d'un commutateur 140. Le récepteur 155 est semblable aux récepteurs décrits en référence à la figure 3 et permet une mémorisation lente et une lecture rapide, mais comme pour le transmetteur utilisé à l'émission sa capacité mémoire est supérieure, de façon qu'elle soit suffisante pour la mise en mémoire du signal vidéo multiplexé correspondant à une trame.

Comme lors de l'émission, le signal transmis au récepteur 155 comme le signal son correspondant transmis à l'amplificateur de puissance audio 122 peut être soit directement reçu via la liaison, soit issu d'un magnétophone standard sur lequel des signaux issus d'une liaison FM auraient été enregistrés. A cet effet les entrées d'enregistrement $E_1$ et $E_2$ du magnétophone 100 à deux pistes sont reliées aux sorties des démodulateurs image 137 et son 121 et les sorties $S_1$ et $S_2$ du magnéto-phone sont être reliées respectivement aux secondes entrées des deux commutateurs 140 et 125. La sortie lecture rapide du récepteur 155 est reliée à l'entrée d'un circuit de démultiplexage 156 qui restitue trois composantes de couleur R, V, B à partir du signal multiplexé relu rapidement dans la mémoire du récepteur 155. Les sorties du circuit de démultiplexage 156 sont reliées aux entrées de commande d'un moniteur standard 60.

L'invention n'est pas limitée aux modes de réalisation décrits et représentés. En particulier, dans le second mode de réalisation, un circuit de multiplexage 15 a été prévu après la caméra pour traiter les composantes du signal de télévision au rythme d'analyse normal, et fournir un signal multiplexé à ce même rythme qui est ensuite traité dans un transmetteur qui le met en mémoire rapidement et le restitue à un rythme lent en vue de son traitement pour transmission sur liaison FM. Il est également possible de modifier le transmetteur TAV 2480 pour qu'il traite séquentiellement les composantes de couleur et les combine directement dans le transmetteur, afin d'enregistrer en mémoire rapidement un signal résultant d'un traitement dans le transmetteur. Un traitement inverse doit bien entendu être prévu à la réception en modifiant convenablement le récepteur TAV 2485. Il est aussi possible dans un autre mode de réalisation de traiter les composantes R, V, B par trois transmetteurs comme sur la figure 1, puis de réaliser un multiplexage temporel des signaux lents issus des transmetteurs, ce signal multiplexé étant ensuite appliqué à un modulateur semblable au modulateur 300 de la figure 5.

De plus, comme indiqué les valeurs des fréquences porteuses peuvent être modifiées à volonté. Les seules contraintes étant que les bandes des porteuses modulées image et son soient dans la bande S.C.A et puissent être convenablement séparées, par filtrage, les unes des autres. A cet effet, les diviseurs de fréquence utilisés dans le modulateur peuvent être programmables.

Par ailleurs le moyen de génération d'images décrit ci-dessus est une caméra. Mais les composantes vidéo peuvent être issues d'un magnétoscope par exemple.

L'invention s'applique notamment à la transmission des diaporamas avec le commentaire son associé, à la diffusion de conférences, de programmes d'enseignement spécialisés. Elle permet moyennant un matériel peu sophistiqué d'apporter l'image via une diffusion FM, c'est-à-dire sans utiliser de canaux spécialisés.

## REVENDICATIONS

1. Transmetteur de programmes audiovisuels par liaison FM, comportant des moyens de génération de programmes (10) sous forme de signaux vidéo et son associés, caractérisé en ce qu'il comporte un dispositif à mémorisation rapide et lecture lente du signal vidéo (20), un modulateur à modulation de fréquences (30) recevant le signal vidéo relu lentement issu du dispositif à mémorisation (20) et le signal son associé, et modulant par ces signaux des sous-porteuses choisies dans la bande de service d'un canal à modulation de fréquence, la sortie du modulateur de sous-porteuses (30) étant reliée à une entrée de modulation, dite entrée S.C.A, d'un modulateur FM recevant également un signal audiostéréo appliqué à son entrée correspondante, le transmetteur comportant en outre des moyens d'émission, amplificateur de puissance (70) et antenne (80), reliés à la sortie de ce modulateur FM (60) pour l'émission du signal composite.

2. Transmetteur selon la revendication 1, caractérisé en ce que, le signal vidéo fourni par les moyens de génération de programmes étant constitué des trois composantes de couleur, R, V, B, le dispositif à mémorisation rapide et lecture lente (20) du signal vidéo comporte trois circuits ayant chacun une mémoire de trame pour chacune des composantes de couleur, les sorties de ces circuits étant reliées à des entrées correspondantes du modulateur de sous-porteuses (30) qui comporte quatre modulateurs de fréquence élémentaires (37, 41, 45 et 31) centrés sur quatre sous-porteuses réparties dans la bande de service, respectivement modulées par les trois composantes de couleur à vitesse lente issues du dispositif à mémorisation et par le signal son.

3. Transmetteur selon la revendication 2, caractérisé en ce que la bande de service s'étendant entre 60 et 110 KHz environ, les sous-porteuses sont espacées d'environ 10 KHz et respectivement voisines de 70, 80, 90 et 100 KHz.

4. Transmetteur selon la revendication 1, caractérisé en ce que les moyens de génération de signal comportent une caméra (10) et un circuit de multiplexage temporel (15) des composantes de couleur issues de la caméra, le dispositif à mémorisation rapide et lecture lente (200) comportant une seule mémoire de trame de capacité déterminée par la définition souhaitée pour l'image, la sortie de ce dispositif de mémorisation étant reliée à une entrée d'un modulateur de sous-porteuses (300) qui comporte deux modulateurs de fréquence élémentaires (37, 31) centrés sur deux sous-porteuses respectivement modulées par le signal vidéo multiplexé, à vitesse lente, issu du dispositif de mémorisation et par le signal son.

5. Transmetteur selon la revendication 4, caractérisé en ce que la bande de service s'étendant entre 60 et 110 KHz environ, la bande de modulation par le signal vidéo est limitée à une bande latérale de 15 KHz environ transmise entre 70 et 85 KHz environ, le modulateur (300) comportant à cet effet un filtre de bande latérale (51), la sous-porteuse son étant choisie entre 95 et 100 KHz environ.

6. Transmetteur selon la revendication 1, caractérisé en ce que le signal vidéo fourni par les moyens de génération de programmes étant constitué des trois composantes de couleur, R, V, B, le dispositif à mémorisation rapide et lecture lente (20) du signal vidéo comporte trois circuits ayant chacun une mémoire de trame pour chacune des composantes de couleur, les sorties de ces circuits étant reliées aux entrées d'un circuit de multiplexage temporel de ces composantes, la sortie de ce circuit étant reliée à l'entrée correspondante du modulateur de sous-porteuses (300) qui comporte deux modulateurs de fréquence élémentaires (37, 31) centrés sur deux sous-porteuses respectivement modulées par le signal vidéo à vitesse lente, multiplexé, issu du circuit de multiplexage et par le signal son.

7. Transmetteur selon la revendication 4, caractérisé en ce que la sortie du dispositif à mémorisation rapide et lecture lente est également reliée à une entrée $(E_1)$ d'enregistrement d'un magnétophone (100) à deux pistes dont l'autre entrée est reliée à l'entrée de signal son, des commutateurs (210, 220) étant prévus pour commuter les entrées du modulateur de sous-porteuses, de la sortie du dispositif à mémorisation rapide et lecture lente (200) et de l'entrée de signal son aux sorties respectives $(S_1 , S_2)$ du magnétophone.

8. Récepteur associé à un transmetteur selon la revendication 1, caractérisé en ce qu'il comporte en série un récepteur FM (110), un circuit de filtrage (120, 131, 132, 133) des différentes sous-porteuses contenues dans le signal reçu associées aux signaux vidéo et son, un circuit de démodulation des sous-porteuses filtrées et un dispositif à mémorisation lente et lecture rapide (150) des signaux vidéo, des moyens de restitution du son démodulé (122, 123) étant reliés à la sortie de démodulation du signal son et des moyens de restitution de l'image (60) étant reliés à la sortie du dispositif de mémorisation à lecture rapide.

9. Récepteur selon la revendication 8, caractérisé en ce que les sorties du circuit de démodulation sont également reliées aux entrées d'enregistrement d'un magnétophone (100), des moyens de commutation (140, 125) étant prévus pour relier l'entrée du dispositif à mémorisation lente et lecture rapide (155) et l'entrée des moyens de restitution du son soit aux sorties du démodulateur, soit aux sorties du magnétophone.

FIG_1

FIG_3

FIG_2

0169752

# FIG_4

RECEPTEUR FM — 110
105

FILTRE PASSE-BANDE — 131
FILTRE PASSE-BANDE — 132
FILTRE PASSE-BANDE — 133
FILTRE PASSE-BANDE — 120

72kHz ±3kHz
82kHz ±3kHz
92kHz ±3kHz
100kHz ±3kHz

DEMODULATEUR — 134
DEMODULATEUR — 135
DEMODULATEUR — 136
DEMODULATEUR — 121

AMPLIFICATEUR DE PUISSANCE — 122

150

RECEPTEUR TAV 2485
RECEPTEUR TAV 2485
RECEPTEUR TAV 2485

123

R   V   B   — 160

MONITEUR

# FIG_5

**CAMERA** 10

R V B

**CIRCUIT DE MULTIPLEXAGE** 15

**DISPOSITIF A MEMORISATION RAPIDE ET LECTURE LENTE** 200

210 $S_1$

$E_1$

**MAGNETOPHONE**

$E_2$

$S_2$ 220

SON

**MODULATEUR DE SOUS-PORTEUSES** 300

**SCA MODULATEUR FM**

**AMPLIFICATEUR DE PUISSANCE** 70

80

SIGNAL AUDIO STEREO

# FIG_7

A

$(G+D)$

$(G-D)$

Image

S

F(kHz)

0   15 19 23   38   53,60   70   85   95   110

BANDE AUDIO STEREO        BANDE S.C.A.

# FIG_6

# FIG_8

105

110 — RECEPTEUR FM

130 — FILTRE PASSE-BANDE

120 — FILTRE PASSE-BANDE

137 — DEMODULATEUR

121 — DEMODULATEUR

125

122 — AMPLIFICATEUR DE PUISSANCE

123

E2

S2

E1

S1

MAGNETOPHONE

100

140

155 — DISPOSITIF A MEMORISATION LENTE ET LECTURE RAPIDE

156 — CIRCUIT DE DEMULTIPLEXAGE

R  V  B

60 — MONITEUR

0169752

Office européen
des brevets

**RAPPORT DE RECHERCHE EUROPEENNE**

Numero de la demande

EP 85 40 1178

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | US-A-4 405 944 (EILERS) <br> * Colonne 2, lignes 53-57; colonne 12, lignes 53-58; colonne 13, lignes 6-11; colonne 13, lignes 22-33 * | 1 | H 04 N 1/00 <br> H 04 N 1/46 <br> H 04 N 7/04 |
| A | | 5,8 | |
| | --- | | |
| Y | US-A-3 518 376 (KAMEN) <br> * Colonne 2, ligne 35 - colonne 3, ligne 5 * | 1 | |
| A | | 3 | |
| | --- | | |
| Y | US-A-3 061 670 (OSTER) <br> * Colonne 1, lignes 19-25; colonne 3, lignes 54-57; colonne 5, lignes 70-73; colonne 6, lignes 57-60; colonne 7, lignes 19-22; figures 1-2 * | 1 | **DOMAINES TECHNIQUES RECHERCHES (Int. Cl.4)** <br><br> H 04 N 7/06 <br> H 04 N 7/04 <br> H 04 N 1/00 <br> H 04 N 1/46 <br> H 04 N 7/12 |
| A | | 8 | |
| | --- -/- | | |

Le présent rapport de recherche a été établi pour toutes les revendications

| Lieu de la recherche LA HAYE | Date d'achevement de la recherche 02-10-1985 | Examinateur YVONNET J.W |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

0169752

**RAPPORT DE RECHERCHE EUROPEENNE**

Office européen
des brevets

Numero de la demande

EP 85 40 1178

Page 2

## DOCUMENTS CONSIDERES COMME PERTINENTS

| Catégorie | Citation du document avec indication. en cas de besoin, des parties pertinentes | Revendication concernee | CLASSEMENT DE LA DEMANDE (Int Cl 4) |
|---|---|---|---|
| Y | NACHRICHTENTECHNISCHE ZEITSCHRIFT, vol. 29, no. 3, mars 1976, pages 240-248, Berlin, DE; Y. NUMAGUCHI: "Wie man stillstehende Bilder überträgt" <br> * Page 241, colonne de gauche, ligne 48 - colonne de droite, ligne 8; page 241, colonne de droite, lignes 34-37 * | 1 | |

-----

**DOMAINES TECHNIQUES RECHERCHES (Int. Cl 4)**

Le present rapport de recherche a été établi pour toutes les revendications

| Lieu de la recherche LA HAYE | Date d achèvement de la recherche 02-10-1985 | Examinateur YVONNET I W |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82